# EUROPEAN PATENT SPECIFICATION

(11) **EP 0 921 966 B1**
(45) Date of publication and mention of the grant of the patent: **20.02.2002**
(21) Application number: 96929085.7
(22) Date of filing: 29.08.1996
(51) Int. Cl.: B60R 21/26

(54) **HYBRID INFLATOR FOR INFLATING AIR BAGS**
HYBRIDE AUFBLASVORRICHTUNG ZUM AUFBLASEN VON AIRBAGS
APPAREIL HYBRIDE POUR GONFLER DES COUSSINS PNEUMATIQUES DE SECURITE

(43) Date of publication of application: 16.06.1999
(73) Proprietor: ATLANTIC RESEARCH CORPORATION, Gainesville, Virginia 22065-1699 (US)
(72) Inventor: DI GIACOMO, Michael, Gainesville, VA 22065 (US); SCHEFFEE, Robert, S., Gainesville, VA 22065 (US); WOODS, Charles, D., Gainesville, VA 22065 (US); GOLD, Stephen, Gainesville, VA 22065 (US)
(74) Representative: Long, Giorgio
(86) International application number: US9613824
(87) International publication number: WO9808715

(56) References cited:
- US-A- 3 723 205
- US-A- 5 263 740
- US-A- 5 344 186
- US-A- 5 348 344
- US-A- 5 350 192
- US-A- 5 470 104
- US-A- 5 494 312

## Description

### Field of the Invention

The present invention is directed to a hybrid inflator for air bag inflation and, in particular, to a hybrid inflator which utilizes a combustible gas-containing pressure vessel.

### Background Art

The use of hybrid inflators for the inflation of air bags in automobiles is well known. Typically, a hybrid inflator includes a rupturable burst disk which releases a flow of gas from a pressure vessel in which the gas is stored to an air bag for inflation thereof. Rupture of the burst disk is responsive to a vehicle condition such as a collision.

In certain hybrid inflators, an igniter assembly is provided which, when actuated, ignites a body of pyrotechnic material. The ignited pyrotechnic material heats and pressurizes a stored inflator gas. The heated and pressurized stored inflator gas is then released for air bag inflation by rupture of the burst disk.

In the prior art, it has been proposed to use a gaseous hydrocarbon as part of the stored inflator gas. In United States Patent No. 5,263,740, a hybrid air bag inflator is disclosed which includes a metal container having a sealed chamber. The sealed chamber contains a mixture of gases including an inert gas, a flammable fuel gas and an oxidizer gas. In conjunction with the metal container, an ignitable material is provided which is ignited by a squib. Ignition of the ignitable material releases the gases in the sealed chamber for combustion of the flammable fuel gas portion thereof for air bag inflation.

US 5 470 104, which comprises the features mentioned in the preamble of claim 1, discloses an inflatable device inflation apparatus which includes first and second chambers and initiator means, wherein the ignition of a fluid fuel and an oxidant occurs in the first chamber.

United States Patent Nos. 5,350,192 to Blumenthal, 5,344,186 to Bergerson and 5,348,344 to Blumenthal et al. also disclose hybrid-type inflators utilizing a mixture of a fuel gas and other gases.

These types of hybrid inflators are not without their drawbacks. Since the gaseous hydrocarbon is combined with an inert gas and an oxidizer gas, it is difficult to realize uniform ignition of the combustible portion of the stored gas. In addition, these prior art inflators tend to be bulky in size and weight due to the presence of a manifold or plenum which receives the released stored gas prior to air bag inflation. These prior art devices also tend to be complex in design. In addition, solid particulate levels in the gas may be at unacceptable levels due to ineffective combustion.

In view of the drawbacks of these prior art hybrid inflators, a need has developed to provide an improved hybrid inflator which reduces solid particulate levels in the effluent gas when inflating air bags and also provides increased flexibility in inflator performance. In addition, a need has developed to provide inflator designs which are lighter in weight, simpler in design for weight savings when used in automobiles and lower in manufacturing costs.

In response to these needs, the present invention provides a hybrid inflator which utilizes a combustible gas in a first pressure vessel with a second pressure vessel storing a compressed oxidizing gas such as air, a mixture of argon and oxygen or mixtures thereof.

### Summary of the Invention

Accordingly, it is a first object of the present invention to provide an improved hybrid inflator for air bag inflation.

Another object of the present invention is to provide a method of inflating air bags.

Other objects and advantages of the present invention will become apparent as a description thereof proceeds.

In satisfaction of the foregoing objects and advantages, the present invention provides a hybrid inflator as outlined in the appendent apparatus claims 1-7.

According to the invention, a method of air bag inflation is outlined in the appended method claims 8-11.

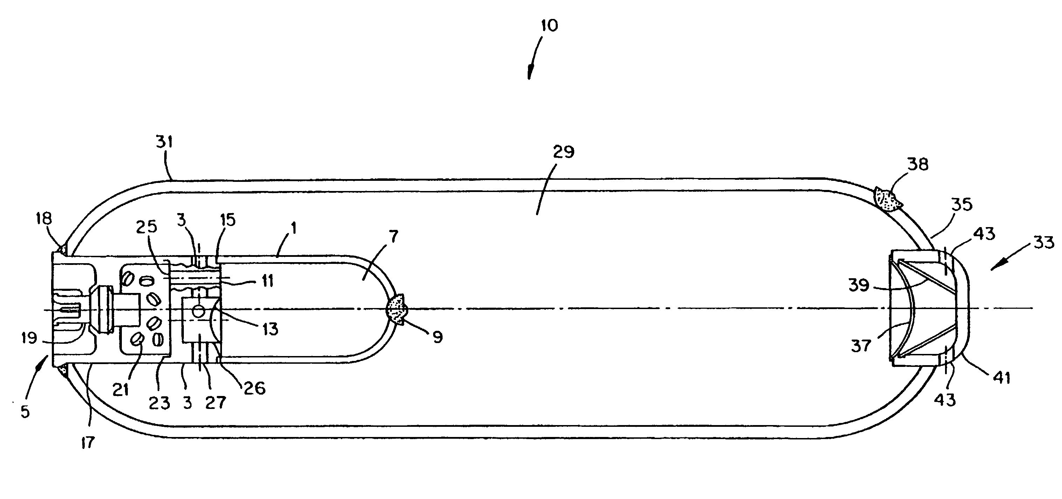

### Brief Description of the Drawing

Reference is now made to the sole drawing of the invention which depicts a cross-sectional view of a hybrid inflator according to the present invention.

### Description of the Preferred Embodiments

A first embodiment of the inventive hybrid inflator is depicted in the sole drawing. The hybrid inflator is generally designated by the reference numeral 10 and includes a first pressure vessel 1 having an end closure 3 and an igniter assembly 5.

The pressure vessel 1 has an interior 7 filled with a combustible gas such as methane or hydrogen, typically at 3000 psi. Of course, other pressures may be used ranging from as low as 500 psi up to 5000 psi. The pressure vessel 1 can also have a fill port 9 to facilitate introduction of the combustible gas into the vessel 1.

The end closure 3 seals the end of the vessel 1 opposite the fill port 9 to maintain the interior 7 in a pressurized state. The end closure 3 is secured to the sidewalls of the vessel 1 at weld 15. The-end closure 3 has an inlet burst disk 11 and an outlet burst disk 13. These burst disks are designed to rupture at a given pressure as is well known in the prior art. Thus, a further description thereof is not deemed necessary for understanding of the invention. The function of the burst disks with regard to the other inflator components will be described below.

The igniter assembly 5 includes a housing 17, squib 19 and a propellant charge 21. The igniter assembly 5 is typical of igniters used in hybrid inflators. In use, the igniter assembly responds to a vehicle condition such as a collision and begins a sequence of steps to inflate an air bag.

The igniter assembly housing 17 is shown connected to the end closure at weld 23. The igniter assembly housing 17 forms part of a second pressure vessel 31 by virtue of the weld 18. The end closure 3 includes a passageway 25 which provides communication between the propellant charge 21 and the inlet burst disk 11. The end closure 3 also contains a manifold or plenum 25 which is in communication with the outlet burst disk 13. A series of outlet passageways 27 interconnects the manifold 26 with the interior 29 of the surrounding pressure vessel 31. The outlet passageways 27 can emanate from the manifold 26 in any configuration, e.g. radially or positioned at 90° segments.

The pressure vessel 31 stores a compressed oxidizing gas such as air, a mixture of an inert gas such as argon and oxygen, or other mixtures.

The pressure vessel 31 includes a discharge assembly 33 secured to the vessel 31 at weld 35. The discharge assembly 33 includes a burst disk 37, a diffuser 39 and an outlet manifold 41 having discharge passageways 43. The discharge passageways 43 direct the expelled contents of the pressure vessels 1 and 31 into an air bag for inflation thereof. The pressure vessel 31 can also have a fill port 37 for filling of the pressure vessel 31 with the compressed oxidizing gas.

It should be understood that the embodiment depicted in the sole figure is a preferred embodiment only. That is, although the pressure vessel 31 surrounds the igniter assembly 5 and pressure vessel 1, other configurations can be employed wherein the outlet of the pressure vessel 1 communicates with the interior of the pressure vessel 31. Likewise, the end closure 3 of the pressure vessel 1 is exemplary and other configurations can be used providing communication is maintained between the solid propellant 21 of the igniter assembly and the inlet of the pressure vessel 1.

The compressed oxidizing gas is preferably at 3500 psi but can range between 500 and 5000 psi, depending on a desired inflator performance requirement.

The use of a combustible gas in a separate vessel allows precise control of the onset of the air bag inflation. The solid propellant 21, when ignited, ruptures the inlet burst disk and heats and pressurizes the combustible gas, e.g. methane, above its autoignition temperature. The hot combustible gas then ruptures the first pressure vessel outlet burst disk and is expelled into the compressed air pressure vessel wherein it reacts with the oxygen present in the compressed air. Combustion of the gas at this stage in the process then raises the compressed air temperature and pressure. The pressure rise fails the rupture disk at the discharge assembly, thus allowing escaping gases to inflate a vehicle crash bag.

Any combustible gas can be utilized in the inventive hybrid inflator, including hydrogen gas, methane or the like. Alternative compressed oxidizing gas mixtures can also be used such as a mixture of argon and oxygen or another inert gas and oxygen. Oxygen should be present in the compressed oxidizing gas to permit the gaseous hydrocarbon or other combustible as to combust when leaving the first pressure vessel.

The inventive hybrid inflator offers improvements over prior art designs by the use of a separate combustible gas-containing pressure vessel. This feature reduces harzard and improves combustion. The inventive design also provides increased flexibility in inflator performance since different combinations of combustible gas and compressed oxidizing gases can be used depending on the desired inflator performance.

As such, an invention has been disclosed in terms of preferred embodiments thereof which fulfills each and every one of the objects of the present invention as set forth hereinabove and provides an improved hybrid inflator and method for inflating air bags.

## Claims

1. A hybrid inflator (10) comprising:
- a first combustible gas-containing pressure vessel (1) having a closure end (3) having an inlet burst disk (11) and an outlet burst disk (13); said closure end (3) including a first inlet passageway (25) in communication with said inlet burst disk (11) and at least one outlet passageway (27) in communication with said outlet burst disk (13);
- a second compressed oxidizing gas-containing pressure vessel (31) having a discharge assembly (33);
- an igniter assembly (6) including a solid propellant (21) in communication with said inlet burst disk (11), **characterised in that**
- said second compressed oxidising gas-containing pressure vessel (31) contains inert gas and oxidizer, and
- said igniter assembly (5) forms a part of a wall of said second pressure vessel (31).

2. The hybrid inflator (10) of claim 1, wherein said first combustible gas-containing pressure vessel (1) is positioned within said second compressed oxidizing gas-containing pressure vessel (31).

3. The hybrid inflator (10) of claim 1, wherein said combustible gas is methane or hydrogen.

4. The hybrid inflator (10) of claim 1, wherein said outlet passageway (27) provides communication between said outlet burst disk (13) and the interior of said second pressure vessel (31).

5. The hybrid inflator (10) of claim 4, wherein said at least one outlet passageway (27) further comprises a plurality of outlet passageways.

6. The hybrid inflator (10) of claim 4, wherein said closure end (3) interconnects said igniter assembly (5) and said first pressure vessel (1).

7. The hybrid inflator (10) of claim 1, wherein said compressed oxidizing gas is air, a mixture of an inert gas and oxygen or mixtures thereof.

8. A method of inflating an air bag comprising the steps of:
- providing a propellant charge (21);
- providing a first combustible gas-containing pressure vessel (1);
- providing a second compressed oxidizing gas-containing pressure vessel (31);
- igniting the propellant charge, ignition thereof heating and pressurizing at least a portion of said combustible gas above an auto ignition temperature thereof in said first pressure vessel (1);
- releasing said heated and pressurized combustible gas from said first pressure vessel (1) when said first pressure vessel (1) reaches a select pressure into said second pressure vessel (31) to ignite said combustible gas with oxygen in the compressed oxidizing gas; and
- releasing gases in said second pressure vessel (31) when said gases reach a select pressure into an air bag for inflation thereof, **characterised in that**
- the auto ignition occurs in the second pressure vessel (31) containing inert gas and oxidizer.

9. The method of claim 8, wherein said combustible gas is methane or hydrogen.

10. The method of claim 9, wherein said compressed gas is air, a mixture of an inert gas and oxygen or mixtures thereof.

11. The method of claim 8, wherein said providing steps further comprises providing:
- said first pressure vessel (1) with an inlet and an outlet, each of said inlet and outlet having a burst disk (11,13) to seal an interior of said first pressure vessel (1) for containing said combustible gas;
- an igniter assembly (5) having a propellant charge (21) said propellant charge in communication with the burst disk (11) of said inlet for performing said heating and pressurizing of said combustible gas above its auto ignition temperature;
- the second pressure vessel (31) with an interior thereof in communication with said burst disk (13) of said outlet of said first pressure vessel (1), said burst disk (13) of said outlet releasing said combustible fuel into said second pressure vessel (31) for combustion of said combustible gas, said second pressure vessel including a discharge assembly for performing said releasing of gases from said first and second pressure vessels (1;31) for air bag inflation.

## Patentansprüche

1. Hybrid-Aufblasvorrichtung (10), die umfasst:
- einen ersten, brennbares Gas enthaltenden Druckbehälter, der ein Verschlussende (3) mit einer Elnlass-Sprengscheibe (11) und einer Auslass-Sprengscheibe (13) aufweist, wobei das Verschlussende (3) einen ersten Einlass-Kanal (25), der mit der Einiass-Sprengscheibe (11) in Verbindung steht, und wenigstens einen Auslass-Kanal (27) enthält, der mit der Auslass-Sprengscheibe (13) in Verbindung steht;
- einen zweiten, komprimiertes oxidierendes Gas enthaltenden Druckbehälter (31) mit einer Ablassbaugruppe (33);
- eine Zündbaugruppe (6), die eine feste Treibladung (21) enthält, die mit der Einlass-Sprengscheibe (11) in Verbindung steht, **dadurch gekennzeichnet, dass**:
- der zweite, komprimiertes oxidierendes Gas enthaltende Druckbehälter (31) inertes Gas und Oxidator enthält, und
- die Zündbaugruppe (5) einen Teil einer Wand eines zweiten Druckbehälters (31) bildet.

2. Hybrid-Aufblasvorrichtung (10) nach Anspruch 1, wobei der erste, brennbares Gas enthaltende Druckbehälter (1) in dem zweiten, komprimiertes oxidierendes Gas enthaltenden Druckbehälter (31) angeordnet ist.

3. Hybrid-Aufblasvorrichtung (10) nach Anspruch 1, wobei es sich bei dem brennbaren Gas um Methan oder Wasserstoff handelt.

4. Hybrid-Aufblasvorrichtung (10) nach Anspruch 1, wobei der Auslass-Kanal (27) Verbindung zwischen der Auslass-Sprengscheibe (13) und dem Innenraum des zweiten Druckbehälters (31) herstellt.

5. Hybrid-Aufblasvorrichtung (10) nach Anspruch 4, wobei der wenigstens eine Auslass-Kanal (27) des Weiteren eine Vielzahl von Auslass-Kanälen umfasst.

6. Hybrid-Aufblasvorrichtung (10) nach Anspruch 4, wobei das Verschlussende (3) die Zündbaugruppe (5) und den ersten Druckbehälter (1) miteinander verbindet.

7. Hybrid-Aufblasvorrichtung (10) nach Anspruch 1, wobei es sich bei dem komprimierten oxidierenden Gas um Luft, ein Gemisch aus inertem Gas und Sauerstoff oder Gemischen daraus handelt.

8. Verfahren zum Aufblasen eines Airbags, das die folgenden Schritte umfasst:
- Bereitstellen einer Treibmittelladung (21);
- Bereitstellen eines ersten, brennbares Gas enthaltenden Druckbehälters (1);
- Bereitstellen eines zweiten, komprimiertes oxidierendes Gas enthaltenden Druckbehälters (31);
- Zünden der Treibmittelladung, wobei durch Zünden derselben wenigstens ein Teil des brennbaren Gases in dem ersten Druckbehälter (1) über eine Selbstzündungstemperatur desselben hinaus erhitzt und unter Druck gesetzt wird;
- Freisetzen des erhitzten und unter Druck gesetzten brennbaren Gases aus dem ersten Druckbehälter (1) in den zweiten Druckbehälter (31), wenn der erste Druckbehälter (1) einen ausgewählten Druck erreicht, um das brennbare Gas mit Sauerstoff in dem komprimierten oxidierenden Gas zu zünden; und
- Freisetzen von Gasen in dem zweiten Druckbehälter (31) in einen Airbag, um diesen aufzublasen, wenn die Gase einen ausgewählten Druck erreichen, **dadurch gekennzeichnet, dass**:
- die Selbstzündung in dem zweiten Druckbehälter (31) stattfindet, der inertes Gas und Oxidator enthält.

9. Verfahren nach Anspruch 8, wobei das brennbare Gas Methan oder Wasserstoff ist.

10. Verfahren nach Anspruch 9, wobei es sich bei dem komprimierten Gas um Luft, ein Gemisch aus inertem Gas und Sauerstoff oder Gemische daraus handelt.

11. Verfahren nach Anspruch 8, wobei die Schritte des Bereitstellens des Weiteren umfassen, dass Folgendes bereitgestellt wird:
- ein Einlass und ein Auslass für den ersten Druckbehälter (1), wobei der Einlass und der Auslass eine Sprengscheibe (11, 13) aufweisen, um einen Innenraum des ersten Druckbehälters (1) abzudichten und das brennbare Gas einzuschließen;
- eine Zündbaugruppe (5) mit einer Treibmittelladung (21), wobei die Treibmittelladung mit der Sprengscheibe (11) des Einlasses in Verbindung steht, um das brennbare Gas über seine Selbstzündungstemperatur hinaus zu erhitzen und unter Druck zu setzen;
- ein Innenraum für den zweiten Druckbehälter (31), der mit der Sprengscheibe (13) des Auslasses des ersten Druckbehälters (1) in Verbindung steht, wobei die Sprengscheibe (13) des Auslasses den brennbaren Treibstoff in den zweiten Druckbehälter (31) hinein freisetzt, um das brennbare Gas zu verbrennen, und wobei der zweite Druckbehälter eine Ablassbaugruppe enthält, die das Freisetzen von Gasen aus dem ersten und dem zweiten Druckbehälter (1, 31) zum Aufblasen des Airbags ausführt.

## Revendications

1. Organe hybride de gonflage (10) comprenant :
un premier récipient (1) sous pression contenant un gaz combustible et ayant une extrémité (3) de fermeture possédant un disque d'éclatement d'entrée (11) et un disque d'éclatement de sortie (13), l'extrémité de fermeture (3) comprenant un premier passage d'entrée (25) en communication avec le disque d'éclatement d'entrée (11) et au moins un passage de sortie (27) en communication avec le disque d'éclatement de sortie (13),
un second récipient (31) sous pression contenant un gaz oxydant comprimé et ayant un ensemble (33) d'évacuation, et
un ensemble (5) à allumeur comprenant un matériau propulseur solide (21) en communication avec le disque d'éclatement d'entrée (11), **caractérisé en ce que**
le second récipient (31) sous pression contenant un gaz oxydant comprimé contient un gaz inerte et un agent oxydant, et
l'ensemble à allumeur (5) fait partie d'une paroi du second récipient (31) sous pression.

2. Organe hybride de gonflage (10) selon la revendication 1, dans lequel le premier récipient (1) sous pression contenant un gaz combustible est disposé dans le second récipient (31) sous pression contenant un gaz oxydant comprimé.

3. Organe hybride de gonflage (10) selon la revendication 1, dans lequel le gaz combustible est le méthane ou l'hydrogène.

4. Organe hybride de gonflage (10) selon la revendication 1, dans lequel le passage de sortie (27) assure la communication entre le disque d'éclatement de sortie (13) et l'intérieur du second récipient sous pression (31).

5. Organe hybride de gonflage (10) selon la revendication 4, dans lequel le passage de sortie au moins (27) comporte en outre plusieurs passages de sortie.

6. Organe hybride de gonflage (10) selon la revendication 4, dans lequel l'extrémité de fermeture (3) assure l'interconnexion de l'ensemble à allumeur (5) avec le premier récipient sous pression (1).

7. Organe hybride de gonflage (10) selon la revendication 1, dans lequel le gaz oxydant comprimé est de l'air, un mélange d'un gaz inerte et d'oxygène, ou un de leurs mélanges.

8. Procédé de gonflage d'un sac gonflable, comprenant les étapes suivantes :
la mise à disposition d'une charge propulsive (21),
la mise à disposition d'un premier récipient (1) sous pression contenant un gaz combustible,
la mise à disposition d'un second récipient (31) sous pression contenant un gaz oxydant comprimé,
l'allumage de la charge propulsive, l'allumage provoquant le chauffage et la mise sous pression d'une partie au moins du gaz combustible au-delà de sa température d'auto-allumage dans le premier récipient sous pression (1),
la libération du gaz combustible chaud sous pression du premier récipient sous pression (1) lorsque le premier récipient sous pression (1) atteint une pression sélectionnée dans le second récipient sous pression (31) pour l'allumage du gaz combustible avec de l'oxygène du gaz oxydant comprimé, et
la libération des gaz contenus dans le premier récipient sous pression (31) lorsque les gaz atteignent une pression choisie dans un sac gonflable pour le gonflage de celui-ci, **caractérisé en ce que**
l'auto-allumage se produit dans le second récipient (31) sous pression contenant le gaz inerte et l'oxydant.

9. Procédé selon la revendication 8, dans lequel le gaz combustible est le méthane ou l'hydrogène.

10. Procédé selon la revendication 9, dans lequel le gaz comprimé est l'air, un mélange de gaz inerte et d'oxygène, ou un de leurs mélanges.

11. Procédé selon la revendication 8, dans lequel les étapes de mise à disposition comportent en outre :
la disposition d'une entrée et d'une sortie dans le premier récipient sous pression (1), chacune des entrée et sortie ayant un disque d'éclatement (11, 13) destiné à fermer de manière étanche l'intérieur du premier récipient sous pression (1) destiné à contenir le gaz combustible,
un ensemble à allumeur (5) ayant une charge propulsive (21), la charge propulsive communiquant avec le disque d'éclatement (11) de l'entrée pour assurer le chauffage et la mise sous pression du gaz combustible au-delà de sa température d'auto-allumage, et
le second récipient sous pression (31) est tel que l'intérieur de ce récipient est en communication avec le disque d'éclatement (13) de la sortie du premier récipient sous pression (1), le disque d'éclatement (13) de la sortie libérant le combustible dans le second récipient sous pression (31) afin qu'il permette la combustion du gaz combustible, le second récipient sous pression comprenant un ensemble d'évacuation destiné à exécuter l'évacuation des gaz des premier et second récipients sous pression (1 ; 31) pour le gonflage du sac gonflable.
